# EUROPÄISCHE PATENTANMELDUNG

(11) **EP 4 613 446 A1**
(43) Veröffentlichungstag der Anmeldung: **10.09.2025**
(21) Anmeldenummer: 24162116.8
(22) Anmeldetag: 07.03.2024
(51) Int. Cl.: B25J 15/04, B23B 31/00, B23C 5/26, B23Q 3/12, F16D 1/10

(54) **DREHAUSRICHTUNGSSYSTEM UND WECHSELSYSTEM DAMIT**

(71) Anmelder: SUHNER Schweiz AG, 5242 Lupfig (CH)
(72) Erfinder: Wiedemeier, Stefan, 5242 Lupfig (CH); Ineichen, Stefan, 6210 Sursee (CH)
(74) Vertreter: Gachnang AG Patentanwälte

(57) **Zusammenfassung**

Das erfindungsgemässe Drehausrichtungssystem (1) umfasst eine erste und eine zweite Drehausrichtungs-Einrichtung (2, 3) mit einer ersten bzw. zweiten zylindrischen Ausrichtungsfläche. An der ersten Ausrichtungsfläche (2b) ist eine Anzahl von n Ausrichtungsnuten (4) und an der zweiten Ausrichtungsfläche (3b) mindestens ein bewegliches, zum Eingreifen in eine der n Ausrichtungsnuten (4) von einer Federvorrichtung (6) vorgespanntes Eingriffselement (5) angeordnet, wobei n eine ganze positive Zahl ist, welche einer Anzahl von relativen Drehlagen der zusammengeführten Drehausrichtungs-Einrichtungen (2, 3) entspricht. Jede Ausrichtungsnut (4) erstreckt sich schraubenlinienartig über einen Winkelbereich von mindestens 360°/n. Mit dem erfindungsgemässen Drehausrichtungssystem (1) können zu koppelnde Teile in relativen Drehlagen um eine Kopplungsachse zueinander ausgerichtet werden.

## Beschreibung

Die Erfindung betrifft ein Drehausrichtungssystem nach dem Oberbegriff des Patentanspruchs 1 und ein Wechselsystem damit.

Bei der Bearbeitung von Werkstücken werden Werkzeuge und/oder prozessbedingte Hilfsmittel wie Messtaster oder Greifer eingesetzt. In der Robotik werden Bearbeitungs- und Messmittel, die als letzte Elemente an kinematischen Ketten angeordnet sind, als Endeffektoren bezeichnet. Endeffektoren können mit Hilfe von Spannsystemen an Maschinen oder Roboterarmen in definierten Lagen und Ausrichtungen befestigt und ausgetauscht werden. Das Befestigen und Austauschen kann manuell oder mit einem Wechselsystem erfolgen.

Beim Befestigen von Endeffektoren an Maschinen oder Roboterarmen werden Teile in Verbindung gebracht, welche um eine Kopplungsachse in einer vorgegebenen relativen Drehausrichtung zueinander ausgerichtet sein müssen. Wenn beispielsweise eine Antriebswelle und eine Abtriebswelle formschlüssig gekoppelt werden, so müssen Formkonturen der Antriebs- und der Abtriebswelle passend aufeinandertreffen. Wenn beispielsweise ein Messtaster oder Greifer mit einem Teil einer Maschine oder eines Roboterarms in Verbindung gebracht wird, muss zwischen dem Messtaster oder dem Greifer und einem Teil der Maschine oder des Roboterarms eine gewünschte Drehausrichtung gewährleistet werden.

Ein Wechselsystem umfasst ein Magazin für Endeffektoren, mindestens einen Endeffektor und mit mindestens ein Spannsystem.

Vom Spannsystem ist beispielsweise an einem Roboterarm eine erste Spanneinrichtung und am mindestens einen Endeffektor eine zweite Spanneinrichtung angeordnet. Bei einem Wechselvorgang wird beispielsweise der Endeffektor vom Roboterarm beim Magazin durch Koppeln der ersten und der zweiten Spanneinrichtung ergriffen oder durch Entkoppeln im Magazin abgelegt. Dabei muss sichergestellt werden, dass Teile, die in Verbindung gebracht werden, um die Kopplungsachse in einer vorgegebenen relativen Drehausrichtung zueinander ausgerichtet sind. Der Ablauf bzw. die Logik des Wechselvorganges ist durch eine Maschinensteuerung festgelegt.

DE 10 2019 135 244 A1 beschreibt einen an einer Spindel angeordneten Mitnehmerring, der in Richtung der Drehachse verschiebbar ist und von einem Federelement gegen einen weiterführenden Werkzeughalter gedrückt wird. Der Mitnehmerring und der Werkzeughalter weisen einander zugewandte korrespondierende Konturen auf, welche ineinander einrasten können und im eingerasteten Zustand eine formschlüssige Verbindung zwischen dem Mitnehmerring und dem Werkzeughalter bilden. Die Spindel und der Werkzeughalter sind über Kegelflächen kraftschlüssig verbunden. Wenn die Kegelflächen bei drehender Spindel aufgrund von grossen Bearbeitungskräften, die von der Spindel auf den Werkzeughalter übertragen werden, gegeneinander zu rutschen beginnen, gelangen die korrespondierende Konturen des Mitnehmerrings und des Werkzeughalters in eine Relativposition, in der sie aufgrund der vom Federelement bereitgestellten Federkraft ineinander einrasten. Diese Lösung ist nur bei drehenden Teilen einsetzbar. Eine formschlüssige Verbindung kann erst im drehenden Zustand gewährleistet werden. Das Einrasten von Konturen, die unter Belastung relativ zueinander drehen, führt zu unerwünschten Belastungen und Abnützungen.

Die erfindungsgemässe Aufgabe besteht nun darin eine einfache Lösung zu finden, bei der zu koppelnde Teile in vorgegebenen relativen Drehlagen um eine Kopplungsachse zueinander ausgerichtet werden.

Diese Aufgabe wird durch ein Drehausrichtungssystem mit den Merkmalen des Anspruchs 1 und durch ein Wechselsystem mit diesem Drehausrichtungssystem gelöst. Die abhängigen Ansprüche beschreiben vorteilhafte Ausführungsvarianten, welche weitere Aufgaben lösen.

Ein erfindungsgemässes Drehausrichtungssystem umfasst eine erste und eine zweite Drehausrichtungs-Einrichtung. Die erste Drehausrichtungs-Einrichtung weist eine erste Einrichtungsachse und um die erste Einrichtungsachse eine erste zylindrische Ausrichtungsfläche auf. Die zweite Drehausrichtungs-Einrichtung weist eine zweite Einrichtungsachse und um die zweite Einrichtungsachse eine zweite zylindrische Ausrichtungsfläche auf. Die erste und die zweite Ausrichtungsfläche sind beim Zusammenführen der beiden Drehausrichtungs-Einrichtungen mit aufeinander liegenden Einrichtungsachsen einander zugewandt.

An der ersten Ausrichtungsfläche ist eine Anzahl von n Ausrichtungsnuten und an der zweiten Ausrichtungsfläche mindestens ein bewegliches Eingriffselement angeordnet. Das Eingriffselement ist zum Eingreifen in eine der n Ausrichtungsnuten von einer Federvorrichtung vorgespannt. Dabei ist n eine ganze positive Zahl, welche einer Anzahl von vorgegebenen relativen Drehlagen der zusammengeführten Drehausrichtungs-Einrichtungen entspricht. Jede Ausrichtungsnut erstreckt sich schraubenlinienartig über einen Winkelbereich von mindestens 360°/n und bei mehr als einer Ausrichtungsnut sind die Ausrichtungsnuten in Winkelabständen um die erste Einrichtungsachse verteilt, wobei die Winkelabstände vorzugsweise im Wesentlichen gleich gross sind.

Jede Ausrichtungsnut weist zwischen zwei Nuträndern eine Nutbreite auf und das mindestens eine Eingriffselement kann bei einem Eintrittsanfang jeder Ausrichtungsnut in einem Bereich zwischen den Nuträndern in die Ausrichtungsnut eintreten. Der Winkelbereich, über den sich jede Ausrichtungsnut schraubenlinienartig erstreckt, umfasst den Bereich, in dem das mindestens eine Eingriffselement in den Eintrittsanfang der Ausrichtungsnut eintreten kann.

Das Drehausrichtungssystem ist vorzugsweise so ausgebildet, dass bei zusammengeführten Drehausrichtungs-Einrichtungen das mindestens eine Eingriffselement im Eingriff mit dem Ende einer der sich schraubenlinienartig über einen Winkelbereich von mindestens 360°/n erstreckenden Ausrichtungsnuten ist und dabei eine der relativen Drehlagen gewährleistet wird. Damit die beiden Drehausrichtungs-Einrichtungen nach dem Erreichen einer der relativen Drehlagen unter Beibehaltung dieser Drehlage weiter zusammengeführt werden können, führen in einer vorteilhaften Ausführungsform die n Ausrichtungsnuten ausgehend von den Enden der sich schraubenlinienartig über einen Winkelbereich von mindestens 360°/n erstreckenden Abschnitte parallel zur ersten Einrichtungsachse weiter.

Bei einer weiteren vorteilhaften Ausführungsform ist beim Zusammenführen der ersten und zweiten Drehausrichtungs-Einrichtungen mit aufeinander liegenden Einrichtungsachsen die erste Ausrichtungsfläche radial zu den Einrichtungsachsen innerhalb der zweiten Ausrichtungsfläche angeordnet. Die zweite Ausrichtungsfläche ist eine der zweiten Einrichtungsachse zugewandte Innenfläche. Die erste Ausrichtungsfläche ist eine von der ersten Einrichtungsachse abgewandte Aussenfläche und die n Ausrichtungsnuten können einfach an dieser Aussenfläche ausgebildet werden.

Das mindestens eine vorgespannte, bewegliche Eingriffselement ist bei einer vorteilhaften Ausführung entlang einer quer zur zweiten Einrichtungsachse verlaufenden Linie, insbesondere radial zur zweiten Einrichtungsachse, in der zweiten Drehausrichtungs-Einrichtung zwischen einer von der zweiten Ausrichtungsfläche vorstehenden Position und einer in die Ausrichtungsfläche aufgenommenen Position bewegbar geführt. Die Federvorrichtung stellt die Vorspannung für die Bewegung des mindestens einen Eingriffselements in die vorstehende Position bereit.

Wenn das mindestens eine Eingriffselement eine Kugel umfasst, welche von der Federvorrichtung und der zweiten Drehausrichtungs-Einrichtung vorzugsweise drehbar gehalten ist, kann die bei Relativbewegungen der Drehausrichtungs-Einrichtungen zwischen dem freien Ende des Eingriffselementes und der ersten Ausrichtungsfläche oder der Ausrichtungsnut entstehende Reibung minimal gehalten werden.

Das Eingriffselement und die Federvorrichtung werden so ausgebildet, dass beim Zusammenführen der ersten und zweiten Drehausrichtungs-Einrichtungen mit aufeinander liegenden Einrichtungsachsen das mindestens eine vorgespannte, bewegliche Eingriffselement mit einem freien Ende bei der ersten Ausrichtungsfläche direkt in eine der n Ausrichtungsnuten einführbar ist, oder von einem nutfreien Bereich der ersten Ausrichtungsfläche gegen die in die Ausrichtungsfläche aufgenommene Position bewegbar und beim weiteren Zusammenführen und Erreichen eines Abschnitts einer Ausrichtungsnut in die vorstehende Position und dabei mit dem freien Ende in die Ausrichtungsnut einführbar ist. Wenn das freie Ende in einer Ausrichtungsnut eingeführt ist, folgt es beim weiteren Zusammenführen der Ausrichtungsnut, erzielt dabei eine relative Drehung zwischen den beiden Drehausrichtungs-Einrichtungen um die aufeinanderliegenden Einrichtungsachsen und macht das Erreichen einer der relativen Drehlagen erzielbar.

Ausführungen mit nur einem Eingriffselement können eine oder mehrere Ausrichtungsnuten aufweisen. Das Eingriffselement wird jeweils in eine dieser Ausrichtungsnuten eingreifen und beim weiteren Zusammenführen zum Erreichen einer relativen Drehlage eine relative Drehung zwischen den Drehausrichtungs-Einrichtungen erzielen.

Wenn die erste Ausrichtungsfläche lediglich eine Ausrichtungsnut aufweist und an der zweiten Ausrichtungsfläche nur ein einzelnes Eingriffselement angeordnet ist, ist lediglich eine relative Drehlage erzielbar. Beim Zusammenführen muss zwischen den beiden Drehausrichtungs-Einrichtungen eine relative Drehung von maximal 360° durchgeführt werden. Diese maximal nötige Drehung kann reduziert werden, wenn mindestens zwei, vorzugsweise mindestens drei und insbesondere sechs Ausrichtungsnuten und/oder Eingriffselemente eingesetzt werden.

Bei mindestens zwei Ausrichtungsnuten kann eine der Anzahl Ausrichtungsnuten entsprechende Anzahl von Eingriffselementen in gleichen Winkelabständen um die zweite Einrichtungsachse angeordnet werden. Entsprechend der Anzahl Ausrichtungsnuten ist es vorteilhaft, wenn mindestens zwei, vorzugsweise mindestens drei und insbesondere sechs Eingriffselemente an der zweiten Ausrichtungsfläche in gleichen Winkelabständen um die zweite Einrichtungsachse angeordnet sind. Die beim relativen Drehen zwischen einem Eingriffselement und einer Ausrichtungsnut entstehenden Kräfte werden mit zunehmender Anzahl von Eingriffselementen und Ausrichtungsnuten reduziert.

Es sind auch Ausführungsformen möglich, bei denen eine Anzahl n von mindestens 2 Eingriffselementen in gleichen Winkelabständen um die zweite Einrichtungsachse angeordnet sind und lediglich eine Ausrichtungsnut an der ersten Ausrichtungsfläche ausgebildet ist. Die Ausrichtungsnut erstreckt sich dann über einen Winkelbereich von mindestens 360°/n, so dass beim Zusammenführen eines der Eingriffselemente auf diese Ausrichtungsnut trifft.

Bei einer vorteilhaften Ausführungsform ist das Drehausrichtungssystem zum störungsfreien Erzielen einer formschlüssigen Verbindung zwischen Wellenenden ausgebildet. Dabei umfasst die erste Drehausrichtungs-Einrichtung ein mit der ersten Ausrichtungsfläche verbundenes erstes Wellenende mit einer ersten Formkontur und die zweite Drehausrichtungs-Einrichtung ein mit der zweiten Ausrichtungsfläche verbundenes zweites Wellenende mit einer zweiten Formkontur. Die erste Formkontur kann in den n relativen Drehlagen formschlüssig mit der zweiten Formkontur in Eingriff gebracht werden.

Eine weitere Ausführungsform stellt die Koaxialität der Einrichtungsachsen der Drehausrichtungs-Einrichtungen während und nach dem Zusammenführen sicher. Dazu ist radial ausserhalb der ersten und der zweiten Drehausrichtungs-Einrichtung ein Spannsystem angeordnet. Das Spannsystem umfasst eine erste Spanneinrichtung, welche mit der ersten Drehausrichtungs-Einrichtung verbunden ist, und eine zweite Spanneinrichtung, welche mit der zweiten Drehausrichtungs-Einrichtung verbunden ist. Die erste und die zweite Spanneinrichtung sind in der Richtung der aufeinanderliegenden ersten und zweiten Einrichtungsachse so koppelbar, dass eine erste Kontaktfläche der ersten Spanneinrichtung und eine zweite Kontaktfläche der zweiten Spanneinrichtung mit einer Kopplungskraft beaufschlagt aneinander anliegen und eine der relativen Drehlagen gewährleistet ist. Vorzugsweise ist die erste Spanneinrichtung um die erste Einrichtungsachse drehbar mit der ersten Drehausrichtungs-Einrichtung verbunden und/oder es ist die zweite Spanneinrichtung um die zweite Einrichtungsachse drehbar mit der zweiten Drehausrichtungs-Einrichtung verbunden.

Gemäss einer bekannten Lösung kann das Spannsystem in einer der beiden Spanneinrichtungen radial zur Einrichtungsachse verschiebbare Kugel aufweisen. In der anderen Spanneinrichtung ist ringförmig um die Einrichtungsachse eine an den Kugeldurchmesser angepasste Nut ausgebildet. Vor dem Aufbau der Kopplungskraft sind die Zentren der Kugeln in ihren Führungen in Richtung der Kopplungsachse etwas gegen das Zentrum der Nut verschoben. Zum Aufbau der Kopplungskraft drückt ein Betätigungsorgan die Kugeln in radialer Richtung anfänglich an einen im Längsschnitt quer zur Kopplungsachse verlaufenden Nutrand. Dabei wirken von den Kugeln Kräfte auf den Nutrand. Diese Kräfte bewegen die Spanneinrichtung mit der Nut so weit in die Spanneinrichtung mit den Kugeln, dass die Kontaktflächen der beiden Spanneinrichtungen mit der gewünschten Kopplungskraft beaufschlagt aneinander anliegen.

Bei einem vorteilhaften Spannsystem umfasst die erste Spanneinrichtung ein erstes Element, ein zweites Element und mindestens drei Spannkugeln. Das erste und das zweite Element sind um die erste Einrichtungsachse relativ zueinander verdrehbar. Die mindestens drei Spannkugeln sind entlang einer um die erste Einrichtungsachse führenden Kreislinie an in Umfangsrichtung und in radialer Richtung fixen Positionen des zweiten Elements rollbar gelagert.

Die zweite Spanneinrichtung weist in einem Nutelement mindestens drei Nutführungen auf, die entlang einer um die zweite Einrichtungsachse führenden Kreislinie in gleichen Winkelabständen wie die Spannkugeln angeordnet sind. Jede Nutführung erstreckt sich jeweils in einem Zugangsbereich zum Einführen der Spannkugeln parallel zur zweiten Einrichtungsachse und anschliessend in einem Spannabschnitt teilweise um die zweite Einrichtungsachse. Die Spannabschnitte sind von schraubenlinienartigen Nutverläufen mit tangentialen Komponenten um die Drehachse und mit Komponenten parallel zur Drehachse gebildet.

Die Spannkugeln ragen je mit einem ersten Bereich aus dem zweiten Element heraus und sind radial so von der ersten Einrichtungsachse beabstandet, dass die ersten Bereiche der Spannkugeln beim Koppeln der ersten Spanneinrichtung mit der zweiten Spanneinrichtung in einer Einführposition des zweiten Elementes durch die Zugangsbereiche in die Spannabschnitte führbar sind. Durch Verdrehen des zweiten Elementes relativ zum ersten Element um die Kopplungsachse sind die ersten Bereiche der Spannkugeln in den Spannabschnitten in eine Spannposition bringbar, wobei die ersten Bereiche der Spannkugeln durch die Bewegung entlang der schraubenlinienartigen Nutverläufe die erste und die zweite Kontaktfläche mit der Kopplungskraft aneinander pressbar machen.

Der Aufbau der Kopplungskraft erfolgt durch eine Bewegung der Spannkugeln entlang der schraubenlinienartigen Nutverläufe, die sich je über einen Winkelbereich um die Kopplungsachse erstrecken. Der maximale Winkelbereich eines Spannabschnittes ergibt sich indem von 360° die Summe der Winkelbereiche aller Zugangsbereiche abgezogen und der verbleibende Winkel durch die Anzahl Spannkugeln geteilt wird.

Die erste Spanneinrichtung weist eine sich rotationssymmetrisch um die erste Einrichtungsachse erstreckende Stützfläche zu den Spannkugeln auf, wobei die Spannkugeln bei von den ersten Bereichen abgewandten zweiten Bereichen an der Stützfläche anliegen. Die Spannkugeln befinden sich beim Verdrehen des zweiten Elementes relativ zum ersten Element zwischen den Spannabschnitten und der Stützfläche. Die Steigung der Nutverläufe ist so gewählt, dass das Nutelement beim Verdrehen des zweiten Elementes so in Richtung der Kopplungsachse bewegt wird, dass die Kontaktflächen der beiden Spanneinrichtung gegeneinander bewegt und gepresst werden. Dabei übertragen die Spannkugeln Kräfte zwischen den Spannabschnitten und der Stützfläche.

Gemäss einer vorteilhaften Ausführungsform umfasst die erste Spanneinrichtung ein drittes Element, welches zwischen dem ersten und zweiten Element angeordnet und um die erste Einrichtungsachse drehbar am ersten und/oder zweiten Element gelagert ist, wobei die Stützfläche zu den Spannkugeln am dritten Element ausgebildet ist. Die Drehbarkeit des dritten Elements und der daran ausgebildeten Stützfläche ermöglicht es, dass die Spannkugeln beim Verdrehend des zweiten Elementes sowohl an den Spannabschnitten als auch an der Stützfläche im Wesentlichen eine Abrollbewegung ausführen. Diese Abrollbewegung reduziert die beim Spannen entstehenden Reibungskräfte zwischen den Spannkugeln und den Spannabschnitten sowie der Stützfläche. Beim Verdrehen des zweiten Elementes wird das dritte Element aufgrund der Abrollbewegung um einen grösseren Winkel verdreht als das zweite Element.

Bei einer weiteren vorteilhaften Ausführungsform umfasst das Spannsystem eine Dreheinrichtung, welche das zweite Element relativ zum ersten Element um die erste Einrichtungsachse zwischen der Einführposition und der Spannposition drehbar macht. Die Dreheinrichtung kann vor dem Koppeln das zweite Element in die Einführposition drehen und nach dem Einführen der Spannkugeln in die Spannabschnitte das zweite Elemente relativ zum ersten Element mit den Spannkugeln in den Spannabschnitten in die Spannposition drehen. Zum Trennen der beiden Spanneinrichtungen dreht die Dreheinrichtung das zweite Element von der Spannposition in die Einführposition.

Wenn die Dreheinrichtung eine Federeinrichtung und eine Betätigungseinrichtung umfasst, wird das zweite Element in einer der beiden Drehrichtungen durch die Federeinrichtung und in die andere durch die Betätigungseinrichtung bewegt. Vorzugsweise hält die Federeinrichtung das zweite Element relativ zum ersten Element mit einer Vorspannkraft in der Spannposition und die Betätigungseinrichtung bewegt das zweite Element relativ zum ersten Element entgegen der Vorspannkraft in die Einführposition.

Das erfindungsgemässe Drehausrichtungssystem ist vielfältig einsetzbar. An den jeweiligen Einsatz angepasst umfasst die erste Drehausrichtungs-Einrichtung eine erste Verbindungseinrichtung, welche beispielsweise mit einem Maschinenteil, vorzugsweise einem Roboterarm, verbindbar ist. Die zweite Drehausrichtungs-Einrichtung umfasst eine zweite Verbindungseinrichtung, welche beispielsweise mit einem Endeffektor verbindbar ist.

Wenn das Drehausrichtungssystem zusammen mit einem Endeffektor mit einem antreibbaren Werkzeug eingesetzt wird, umfasst die erste Drehausrichtungs-Einrichtung vorzugsweise einen Antrieb mit einer Antriebswelle und die zweite Drehausrichtungs-Einrichtung eine Abtriebswelle, die beim Koppeln der ersten Drehausrichtungs-Einrichtung mit der zweiten Drehausrichtungs-Einrichtung so mit der Antriebswelle in Verbindung bringbar ist, dass eine Drehbewegung der Antriebswelle auf eine Drehbewegung der Abtriebswelle übertragbar ist. Die Anordnung des Antriebs an der ersten Spanneinrichtung ermöglicht es, dass die Endeffektoren ohne Antriebe aufgebaut werden können und die Antriebsverbindung direkt beim Koppeln der beiden Drehausrichtungs-Einrichtung entsteht.

Ein erfindungsgemässes Wechselsystem umfasst einen Roboterarm, ein Magazin für Endeffektoren, mindestens einen Endeffektor und mindestens ein erfindungsgemässes Drehausrichtungssystem. Am Roboterarm ist die erste oder die zweite Drehausrichtungs-Einrichtung des mindestens einen Drehausrichtungssystem angeordnet und am mindestens einen Endeffektor die zweite bzw. die erste Drehausrichtungs-Einrichtung des mindestens einen Drehausrichtungssystem.

Anhand einiger Figuren wird die Erfindung im Folgenden näher beschrieben. Dabei zeigen
- Figur 1: eine perspektivische Darstellung des Drehausrichtungssystems vor dem Zusammenführen der ersten mit der zweiten Drehausrichtungs-Einrichtung,
- Figur 2: eine perspektivische Darstellung des Drehausrichtungssystems bei direktem Eintritt der Eingriffselemente in Führungsnuten,
- Figur 3: eine perspektivische Darstellung des Drehausrichtungssystems, wenn die Eingriffselemente nicht auf Führungsnuten treffen,
- Figur 4: eine perspektivische Darstellung des Drehausrichtungssystems, wenn die Eingriffselemente im Eingriff zu den Führungsnuten sind,
- Figur 5: eine perspektivische Darstellung des Drehausrichtungssystems, wenn die DrehausrichtungsEinrichtung vollständig zusammengeführt ist,
- Figur 6: eine Schnittdarstellung zu Fig. 1,
- Figur 7: Schnittdarstellungen zu Fig. 2,
- Figur 8: Schnittdarstellungen zu Fig. 3,
- Figur 9: Schnittdarstellungen zu Fig. 4,
- Figur 10: Schnittdarstellungen zu Fig. 5,
- Figur 11: eine perspektivische Längsschnitt-Darstellung eines Drehausrichtungssystems mit zwei Wellenenden mit Formkonturen und mit einem Spannsystem,
- Figur 12: eine perspektivische Darstellung der ersten und zweiten Drehausrichtungs-Einrichtung des Drehausrichtungssystem der Fig. 11,
- Figur 13: eine perspektivische Darstellung des Spannsystems des Drehausrichtungssystem der Fig. 11,
- Figur 14: eine aufgeschnittene perspektivische Darstellung des Spannsystems der Fig. 13 im lösbaren Zustand,
- Figur 15: eine aufgeschnittene perspektivische Darstellung des Spannsystems der Fig. 13 im gespannten Zustand,
- Figur 16: eine perspektivische Darstellung eines Wechselsystem mit einem Roboterarm, einem Magazin für Endeffektoren und Endeffektoren,
- Figur 17: eine perspektivische Darstellung des Endbereichs eines Roboterarms mit einem dem Magazin entnommenen Endeffektor,
- Figur 18: eine perspektivische Darstellung des Endbereichs eines Roboterarms vor dem Entnehmen eines Endeffektors aus dem Magazin,
- Figur 19: eine perspektivische Darstellung des Endbereichs eines Roboterarms mit der Betätigungseinrichtung des Spannsystems in der Einführposition,
- Figur 20: eine perspektivische Darstellung des Endbereichs eines Roboterarms mit vollständig zusammengeführter Drehausrichtungs-Einrichtung, und
- Figur 21: eine perspektivische Darstellung des Endbereichs eines Roboterarms beim Entnehmen des Endeffektors.

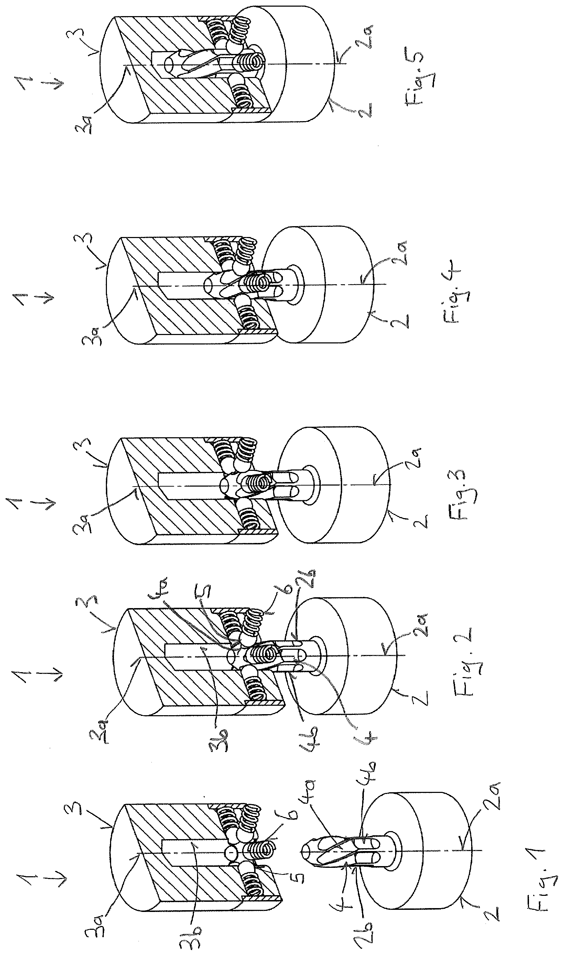

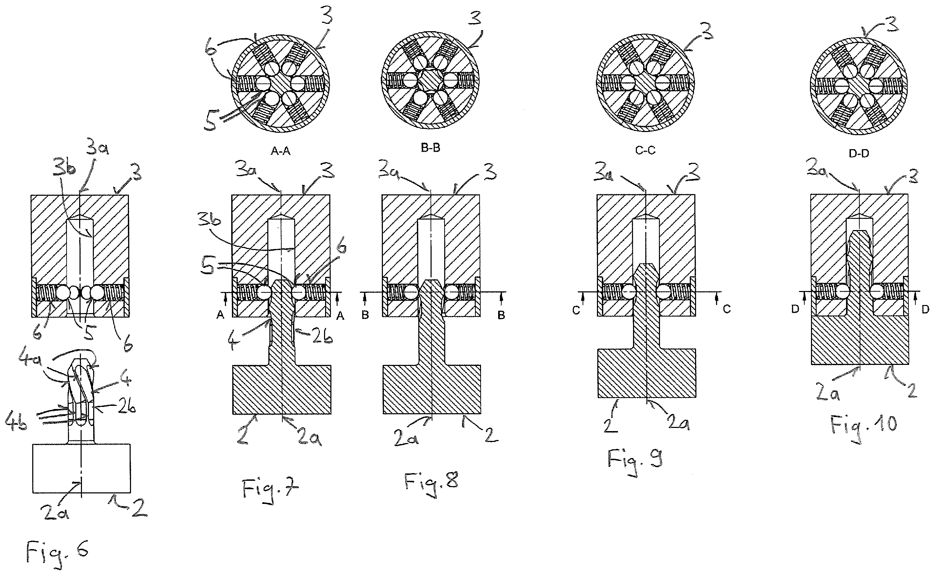

Die Figuren 1 bis 10 zeigen ein Drehausrichtungssystem 1 mit einer ersten Drehausrichtungs-Einrichtung 2 und einer zweiten Drehausrichtungs-Einrichtung 3. Die erste Drehausrichtungs-Einrichtung 2 weist eine erste Einrichtungsachse 2a und um die erste Einrichtungsachse 2a eine erste zylindrische Ausrichtungsfläche 2b auf. Die zweite Drehausrichtungs-Einrichtung 3 weist eine zweite Einrichtungsachse 3a und um die zweite Einrichtungsachse 3a eine zweite zylindrische Ausrichtungsfläche 3b auf. Die beiden Ausrichtungsflächen 2b, 3b sind beim Zusammenführen der beiden Drehausrichtungs-Einrichtungen 2, 3 mit aufeinander liegenden Einrichtungsachsen 2a, 3a einander zugewandt, wobei in der dargestellten Ausführung die erste Ausrichtungsfläche 2b eine von der ersten Einrichtungsachse 2a abgewandte Aussenfläche und die zweite Ausrichtungsfläche 3b eine der zweiten Einrichtungsachse 3a zugewandte Innenfläche ist.

An der ersten Ausrichtungsfläche 2b sind Ausrichtungsnuten 4 und an der zweiten Ausrichtungsfläche 3b sind bewegliche Eingriffselemente 5 angeordnet. Die dargestellte Ausführungsform weist beispielhaft sechs Ausrichtungsnuten 4 und sechs Eingriffselemente 5 auf. Die Eingriffselemente 5 sind zum Eingreifen in die Ausrichtungsnuten 4 von Federn 6 vorgespannt. Aufgrund der sechs in gleichen Umfangswinkeln um die Einrichtungsachsen 2a, 3a angeordneten Ausrichtungsnuten 4 und Eingriffselemente 5 können die beiden Drehausrichtungs-Einrichtung 2, 3 in sechs verschiedenen relativen Drehlagen zusammengeführt werden.

Die Ausrichtungsnuten 4 erstreckt sich in einem ersten Teilbereich 4a schraubenlinienartig über einen Winkelbereich von 360°/6, also 60°, um die erste Einrichtungsachse 2a. Durch eine Bewegung der Eingriffselemente 5 in den ersten Teilbereichen 4a der Ausrichtungsnuten 4 zu den Enden der ersten Teilbereiche 4a gelangen die Drehausrichtungs-Einrichtung 2, 3 in eine der sechs verschiedenen relativen Drehlagen. Damit die beiden Drehausrichtungs-Einrichtungen 2, 3 nach dem Erreichen einer der relativen Drehlagen unter Beibehaltung dieser Drehlage weiter zusammengeführt werden können, führen die Ausrichtungsnuten 4 der dargestellten Ausführungsform anschliessend an die ersten Teilbereiche 4a in zweiten Teilbereichen 4b parallel zur ersten Einrichtungsachse 2a weiter.

Die vorgespannten, beweglichen Eingriffselemente 5 sind entlang einer quer zur zweiten Einrichtungsachse 3a verlaufenden Linie, insbesondere radial zur zweiten Einrichtungsachse 3a, in der zweiten Drehausrichtungs-Einrichtung 3 zwischen einer von der zweiten Ausrichtungsfläche vorstehenden Position und einer in die Ausrichtungsfläche aufgenommenen Position bewegbar geführt. Die Federn 6 stellen die Vorspannung für die Bewegung der Eingriffselemente 5 in die vorstehenden Positionen bereit. Die Eingriffselemente 5 sind vorzugsweise Kugeln, welche von den Federn 6 und der zweiten Drehausrichtungs-Einrichtung 3 drehbar gehalten sind.

Die Federn 6 und die Eingriffselemente 5 sind so ausgebildet, dass beim Zusammenführen der ersten und zweiten Drehausrichtungs-Einrichtungen 2, 3 mit aufeinander liegenden Einrichtungsachsen 2a, 3a immer störungsfrei eine der relativen Drehlagen erzielt wird. Abhängig von den jeweiligen Drehausrichtungen der beiden Drehausrichtungs-Einrichtungen 2, 3 ergibt sich beim Zusammenführen immer eine von zwei Situationen.

Bei der in Fig. 2 dargestellten Situation treffen die Eingriffselemente 5 in ihren vorstehenden Positionen bei der ersten Ausrichtungsfläche 2b direkt auf Ausrichtungsnuten 4 und treten in diese ein. Bei der in Fig. 3 dargestellten Situation treffen die Eingriffselemente 5 in ihren vorstehenden Positionen bei der ersten Ausrichtungsfläche 2b auf nutfreie Bereiche und werden von diesen gegen die in die zweite Ausrichtungsfläche aufgenommenen Positionen bewegt. Beim weiteren Zusammenführen und Erreichen von Teilbereichen 4a der Ausrichtungsnuten 4 gehen die Eingriffselemente in die vorstehenden Positionen und treten dabei mit den freien Enden in die Teilbereiche 4a ein.

Wenn die freien Enden in die Teilbereiche 4a eingetreten sind, folgen sie beim weiteren Zusammenführen den Teilbereichen 4a und erzielen dabei eine relative Drehung zwischen den beiden Drehausrichtungs-Einrichtungen 2, 3 um die aufeinanderliegenden Einrichtungsachsen 2a, 3a. Wenn sich die Eingriffselemente 5, wie in Fig. 4 dargestellt, bei den Enden der Teilbereiche 4a befinden, ist eine der relativen Drehlagen erreicht. Beim weiteren Zusammenführen werden die Eingriffselemente in den zweiten Teilbereichen 4b der Ausrichtungsnuten 4 unter Beibehaltung der relativen Drehlage bewegt bis Anschlagsflächen der beiden Drehausrichtungs-Einrichtungen 2, 3 aneinander anliegen.

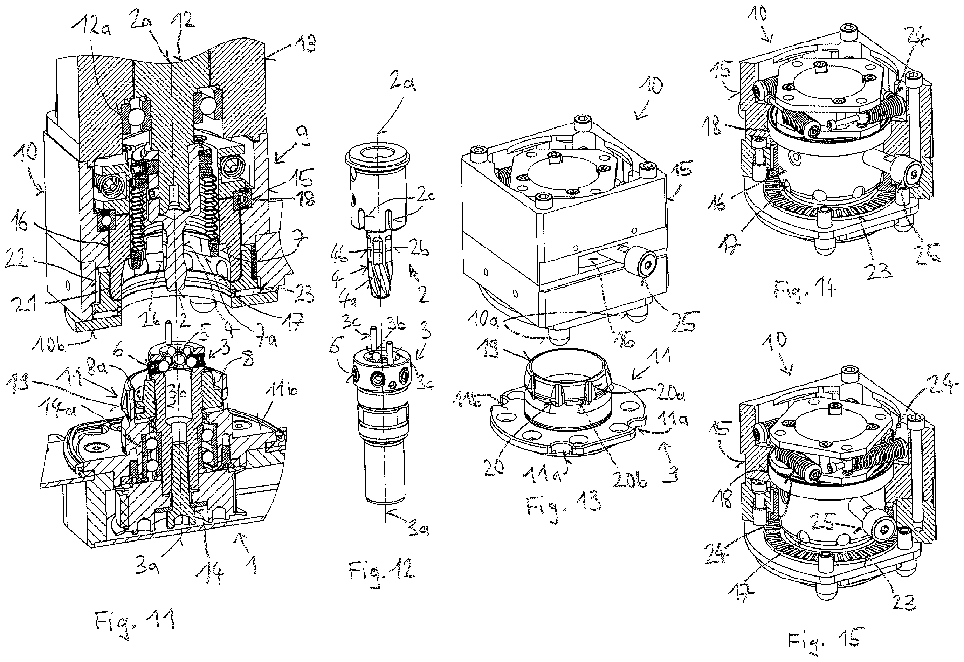

Die Figuren 11 bis 15 zeigen ein Drehausrichtungssystem 1, das nebst den beiden Drehausrichtungs-Einrichtung 2, 3 ein erstes Wellenende 7, ein zweites Wellenende 8 und ein Spannsystem 9 mit einer ersten Spanneinrichtung 10 sowie einer zweiten Spanneinrichtung 11 umfasst, wobei die Wellenenden 7, 8 im durch das Spannsystem 9 gekoppelten Zustand formschlüssig miteinander verbunden sind.

Das erste Wellenende 7 ist über die erste Drehausrichtungs-Einrichtung 2 an einer Antriebswelle 12 eines Antriebs 13 angeordnet und umfasst am freien Ende eine erste Formkontur 7a. Die Antriebswelle 12 ist mit einem Antriebswellenlager 12a an einem statischen Teil des Antriebs 13 drehbar gelagert, wobei dieser statische Teil mit der ersten Spanneinrichtung 10 verbunden ist.

Das zweite Wellenende 8 ist über die zweite Drehausrichtungs-Einrichtung 3 mit einer Abtriebswelle 14 verbunden und umfasst am freien Ende eine zweite Formkontur 8a. Die Abtriebswelle 14 ist über die zweite Drehausrichtungs-Einrichtung 3 mit einem Abtriebswellenlager 14a an der zweiten Spanneinrichtung 11 drehbar gelagert.

Das erste Wellenende 7 ist vorzugsweise balgartig ausgebildet, so dass minimale Ausrichtungs- und Formschlussungenauigkeiten bei drehenden Wellenenden 7, 8 nicht zu unerwünschten Belastungen der Wellenlager 12a, 14a führen.

Die erste Formkontur 7a kann formschlüssig mit der zweiten Formkontur 8a in Eingriff gebracht werden. Zum Erzielen eines Formschlusses werden die beiden Wellenenden 7, 8 mit aufeinanderliegenden Wellenachsen und mit zu den Formkonturen passenden Drehlagen um die Wellenachsen miteinander in Kontakt gebracht. Die Formkonturen 7a, 8a sind beispielsweise so ausgebildet, dass sie in sechs relativen Drehlagen ineinander eingreifen. Zwischen zwei aufeinander folgenden Drehlagen liegt ein Winkel von 60°.

Damit beim Zusammenführen und Koppeln unabhängig von vor dem Zusammenführen vorliegenden Drehausrichtungen der Antriebswelle 12 und der Abtriebswelle 14 störungsfrei eine formschlüssige Verbindung zwischen der Antriebswelle 12 und Abtriebswelle 14 entsteht, sind die erste und die zweite Drehausrichtungs-Einrichtungen 2, 3 so an der Antriebs- und der Abtriebswelle 12, 14 angeordnet, dass die beiden Formkonturen 7a, 8a beim Zusammenführen in eine relative Drehlage gebracht werden, in der die Formkonturen formschlüssig ineinander eingreifen.

Die eingesetzten Drehausrichtungs-Einrichtungen 2, 3 sind in Fig. 12 separat dargestellt. Die erste und die zweite Drehausrichtungs-Einrichtung 2, 3 umfasst nebst den anhand der Fig. 1 bis 10 beschriebenen Elementen je Anschlussbereiche zur Antriebs- bzw. Abtriebswelle 12, 14 und zum ersten bzw. zweiten Wellenende 7, 8. Gegebenenfalls umfassen die Drehausrichtungs-Einrichtungen 2, 3 Kontrollelemente 2c und 3c, welche bei relativen Drehlagen ineinander eingreifen.

Fig. 11 und 13 bis 15 zeigen Details der vorteilhaften ersten Spanneinrichtung 10 und der mit dieser zusammenwirkenden vorteilhaften zweiten Spanneinrichtung 11. Die Spanneinrichtungen 10, 11 weisen eine erste bzw. eine zweite Einrichtungsachse 2a, 3a und um die erste bzw. zweite Einrichtungsachse 2a, 3a eine erste bzw. zweite Kontaktfläche 10b, 11b auf. Die Spanneinrichtungen 10, 11 sind in der Richtung einer Kopplungsachse so koppelbar, dass die erste und die zweite Kontaktfläche 10b, 11b mit einer Kopplungskraft beaufschlagt aneinander anliegen und die Einrichtungsachsen 2a, 3a auf der Kopplungsachse liegen.

Die erste Spanneinrichtung 10 umfasst ein erstes Element 15, ein zweites Element 16 und mindestens drei Spannkugeln 17. Das erste und das zweite Element 15, 16 sind über ein Lager 18 um die erste Einrichtungsachse 2a drehbar miteinander verbunden. Die mindestens drei Spannkugeln 17 sind entlang einer um die erste Einrichtungsachse 2a führenden Kreislinie an in Umfangsrichtung und in radialer Richtung fixen Positionen des zweiten Elements 16 rollbar gelagert.

Die zweite Spanneinrichtung 11 weist in einem Nutelement 19 mindestens drei Nutführungen 20 auf, die entlang einer um die zweite Einrichtungsachse 3a führenden Kreislinie in gleichen Winkelabständen wie die Spannkugeln 17 angeordnet sind. Jede Nutführung 20 erstreckt sich jeweils in einem Zugangsbereich 20a zum Einführen der Spannkugeln 17 parallel zur zweiten Einrichtungsachse 3a und anschliessend in einem Spannabschnitt 20b teilweise um die zweite Einrichtungsachse 3a. Die Spannabschnitte 9b sind von schraubenlinienartigen Nutverläufen mit tangentialen Komponenten um die zweite Einrichtungsachse 3a und mit Komponenten parallel zur zweiten Einrichtungsachse 3a gebildet.

Die Spannkugeln 17 ragen je mit einem ersten Bereich aus dem zweiten Element 16 heraus und sind radial so von der ersten Einrichtungsachse 2a beabstandet, dass die ersten Bereiche der Spannkugeln 17 beim Koppeln der ersten Spanneinrichtung 10 mit der zweiten Spanneinrichtung 11 in einer Einführposition des zweiten Elementes 16 durch die Zugangsbereiche 20a in die Spannabschnitte 20b führbar sind. Ineinander eingreifende Ausrichtungselemente 10a, 11a der Spanneinrichtungen 10, 11 halten die zusammengeführten Spanneinrichtungen in vorgegebenen Kontaktlagen. Durch Verdrehen des zweiten Elementes 16 relativ zum ersten Element 15 um die Kopplungsachse sind die ersten Bereiche der Spannkugeln 17 in den Spannabschnitten 20b in eine Spannposition bringbar, wobei die ersten Bereiche der Spannkugeln 17 durch die Bewegung entlang der schraubenlinienartigen Nutverläufe die erste und die zweite Kontaktfläche 10b, 11b mit der Kopplungskraft aneinanderpressen.

Bei der dargestellten Ausführungsform weist die erste Spanneinrichtung 10 eine sich rotationssymmetrisch um die erste Einrichtungsachse 2a erstreckende Stützfläche 21 zu den Spannkugeln 17 auf, wobei die Spannkugeln 17 mit von den ersten Bereichen abgewandten zweiten Bereichen an der Stützfläche 21 anliegen. Die Spannkugeln 17 befinden sich beim Verdrehen des zweiten Elementes 16 relativ zum ersten Element 15 zwischen den Spannabschnitten 20b und der Stützfläche 21. Die Steigung der Nutverläufe ist so gewählt, dass das Nutelement 19 beim Verdrehen des zweiten Elementes 16 so in Richtung der Kopplungsachse bewegt wird, dass die Kontaktflächen 10b, 11b der beiden Spanneinrichtung 10, 11 gegeneinander bewegt und gepresst werden. Dabei übertragen die Spannkugeln 17 Kräfte zwischen den Spannabschnitten 20b und der Stützfläche 21.

In der dargestellten Ausführungsform umfasst die erste Spanneinrichtung 10 ein drittes Element 22, welches zwischen dem ersten und zweiten Element 15, 16 angeordnet und um die erste Einrichtungsachse 2a drehbar am ersten Element 15 gelagert ist, wobei die Stützfläche 21 zu den Spannkugeln 17 am dritten Element 22 ausgebildet ist. Die Drehbarkeit des dritten Elements 22 und der daran ausgebildeten Stützfläche 21 ermöglicht es, dass die Spannkugeln 17 beim Verdrehen des zweiten Elementes 16 sowohl an den Spannabschnitten 20b als auch an der Stützfläche 21 im Wesentlichen eine Abrollbewegung ausführen. Diese Abrollbewegung reduziert die beim Spannen entstehenden Reibungskräfte zwischen den Spannkugeln 17 und den Spannabschnitten 20b sowie der Stützfläche 21. Beim Verdrehen des zweiten Elementes 16 wird das dritte Element 22 aufgrund der Abrollbewegung um einen grösseren Winkel verdreht als das zweite Element 16.

In der dargestellten Ausführungsform ist das dritte Element 22 am ersten Element 15 über ein rotationssymmetrisch um die erste Einrichtungsachse 2a verlaufendes Drehlager 23 gelagert, beispielsweise über ein Nadellager. Beim Koppeln wird das dritte Element 22 von den Spannkugeln 17 aufgrund ihrer Bewegung entlang der Spannabschnitte 20b in Drehung versetzt. Das Drehlager 23 reduziert die beim Aufbau der Kopplungskraft zwischen dem drehenden dritten Element 22 und dem nicht drehenden ersten Element 15 auftretende Reibung und somit die aufzubringende Betätigungskraft.

Eine Dreheinrichtung macht das zweite Element 16 relativ zum ersten Element 15 um die erste Einrichtungsachse 2a zwischen der Einführposition und der Spannposition drehbar. Die dargestellte Dreheinrichtung umfasst eine Federeinrichtung 24 und eine Betätigungseinrichtung 25. Das zweite Element 16 wird in einer der beiden Drehrichtungen durch die Federeinrichtung 24 und in die andere durch die Betätigungseinrichtung 25 bewegt. Vorzugsweise hält die Federeinrichtung 24 das zweite Element 16 relativ zum ersten Element 15 mit einer Vorspannkraft in der Spannposition und die Betätigungseinrichtung 25 bewegt das zweite Element 16 relativ zum ersten Element 15 entgegen der Vorspannkraft in die Einführposition.

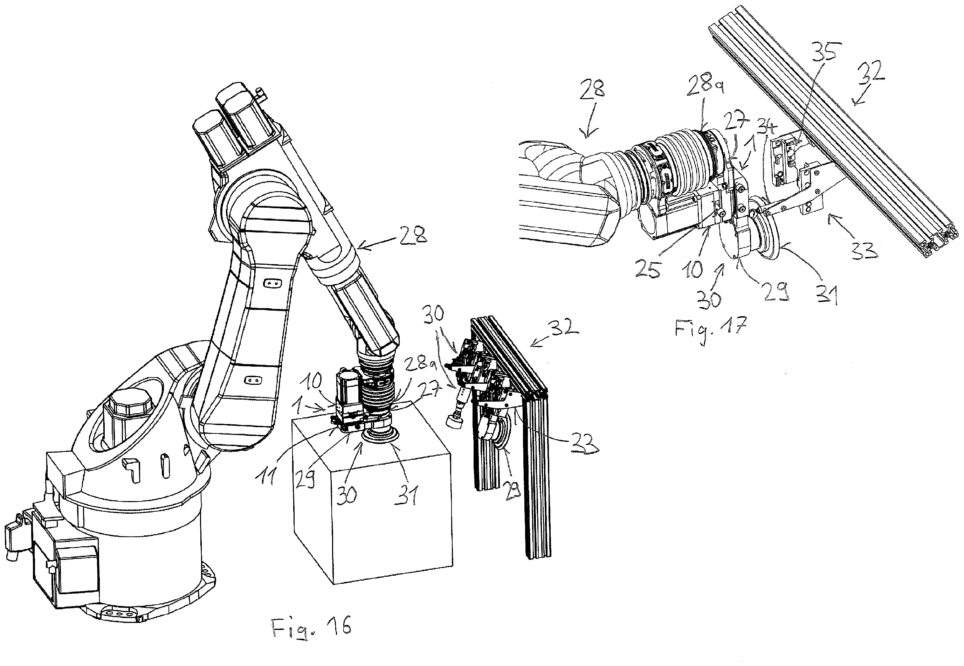

Fig. 16 bis 21 zeigen ein Wechselsystem mit einem Roboterarm 28, einem Magazin 32 und einem Drehausrichtungssystem 1. Das Drehausrichtungssystem 1 umfasst Drehausrichtungs-Einrichtungen 2, 3 mit ersten und zweiten Wellenenden 7, 8 und mit einer ersten und einer zweiten Spanneinrichtung 10, 11, wobei die Wellenenden 7, 8 im gekoppelten Zustand formschlüssig miteinander verbunden sind.

Die erste Spanneinrichtung 10 umfasst eine erste Verbindungseinrichtung 27, welche mit dem freien Ende eines Roboterarms 28 verbindbar ist. Ein Endeffektor 30 umfasst die zweite Spanneinrichtung 11, eine zweite Verbindungseinrichtung 29 zu einem antreibbaren Werkzeug 31 und das Werkzeug 31. Die erste Spanneinrichtung 10 umfasst einen Antrieb 13 mit einer Antriebswelle 12 und die zweite Spanneinrichtung 11 eine Abtriebswelle 14, die beim Koppeln der ersten Spanneinrichtung 10 mit der zweiten Spanneinrichtung 11 Drehmoment übertragend mit der Antriebswelle 12 verbunden wird. Die zweite Verbindungseinrichtung 29 umfasst eine Antriebsübertragung von der Abtriebswelle 14 zum Werkzeug 31.

In der Fig. 16 ist die zweite Spanneinrichtung 11 so mit der ersten Spanneinrichtung 10 verbunden, dass die zweite Verbindungseinrichtung 29 zum freien Ende des Roboterarms 28 führt. In der Fig. 17 ist die zweite Spanneinrichtung 11 so mit der ersten Spanneinrichtung 10 verbunden, dass die zweite Verbindungseinrichtung 29 vom freien Ende des Roboterarms 28 wegführt.

Die verschiedenen Ausrichtungen der Fig. 16 und 17 werden durch die Ausrichtungselemente 10a, 11a ermöglicht, welche an der ersten Spanneinrichtung 10 und an der zweiten Spanneinrichtung 11 ausgebildet sind und in vorgegebenen relativen Ausrichtungen der ersten zur zweiten Spanneinrichtung 10, 11 um die Kopplungsachse ineinander eingreifen. Die durch die Ausrichtungselemente 10a, 11a vorgegebenen relativen Ausrichtungen sind an die Lagen der Spannkugeln 17 und der Zugangsbereiche 20a der Nutführungen 20 angepasst, so dass in den vorgegebenen relativen Ausrichtungen die Spannkugeln 17 in die Zugangsbereiche 20a der Nutführungen 20 einführbar sind.

Das Magazin 32 umfasst Haltevorrichtungen 33 für Endeffektoren 30. Die Haltevorrichtungen 33 umfassen je eine Führungsschiene 34 und eine Einhänganordnung 35. Die Führungsschiene 34 ermöglicht bei einer entsprechenden Bewegung des Roboterarms 28 die Betätigung der Betätigungseinrichtung 25. Die Einhänganordnung 35 ermöglicht bei einer entsprechenden Bewegung des Roborterarms 28 das Ein- und Aushängen eines Endeffektors 30.

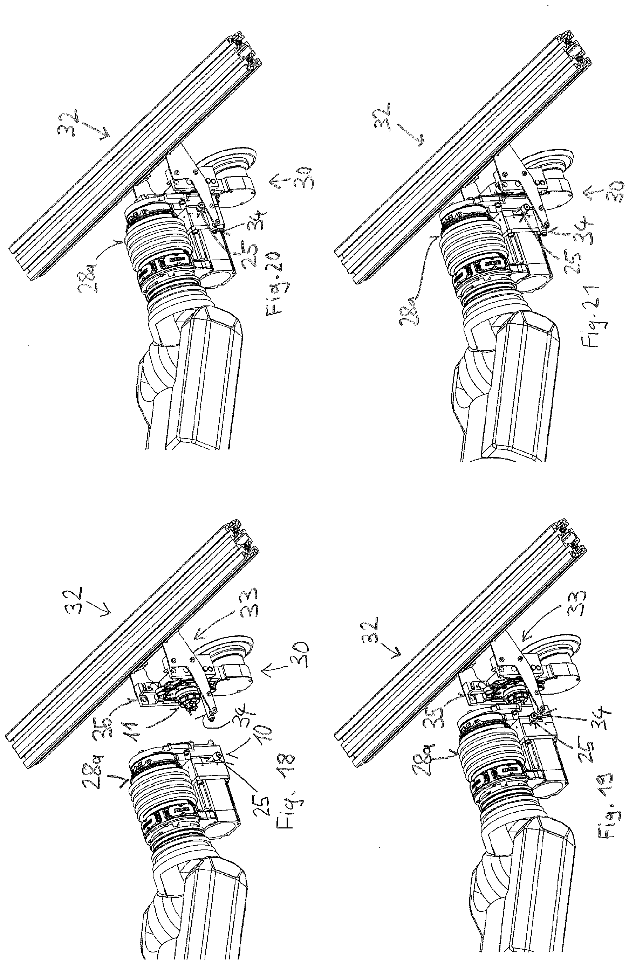

Die Figuren 18 bis 21 zeigen in der Reihenfolge 18, 19, 20, 21 das Verbinden des Roboterarms 28 mit einem Endeffektor 30 und in der Reihenfolge 21, 20, 19, 18 das Lösen des Endeffektors 30 vom Roboterarm 28.

Gemäss Fig. 18 ist das freie Ende 28a des Roboterarms 28 mit der ersten Spanneinrichtung 10 vertikal etwas höher positioniert als die zweite Spanneinrichtung 11 des Endeffektors 30 im Magazin 32.

Gemäss Fig. 19 ist nach einer horizontalen und anschliessend vertikalen, nach unten durchgeführten Bewegung des freien Endes 28a des Roboterarms 28 das zweite Element 16 der ersten Spanneinrichtung 10 durch die im Kontakt zur Führungsschiene 34 erzielte Bewegung der Betätigungseinrichtung 25 relativ zum ersten Element 15 in die Einführposition gedreht.

Gemäss Fig. 20 werden ausgehend von der Situation gemäss Fig. 19 durch eine Horizontalbewegung die erste Spanneinrichtung 10 und die zweite Spanneinrichtung 11 zusammengeführt.

Gemäss Fig. 21 ist nach einer vertikalen, nach oben durchgeführten Bewegung die Betätigungseinrichtung 25 von der Führungsschiene 34 abgehoben, so dass die Federeinrichtung 24 die Spannposition erzielt. Aufgrund der Bewegung nach oben ist der Endeffektor 30 aus der Einhänganordnung 35 entnommen und kann zu einem Arbeitsbereich bewegt werden.

## Patentansprüche

1. Drehausrichtungssystem (1) mit einer ersten Drehausrichtungs-Einrichtung (2), die eine erste Einrichtungsachse (2a) und um die erste Einrichtungsachse (2a) eine erste zylindrische Ausrichtungsfläche (2b) aufweist, und mit einer zweiten Drehausrichtungs-Einrichtung (3), die eine zweite Einrichtungsachse (3a) und um die zweite Einrichtungsachse (3a) eine zweite zylindrische Ausrichtungsfläche (3b) aufweist, wobei die erste und die zweite Ausrichtungsfläche (2b, 3b) beim Zusammenführen der ersten und zweiten Drehausrichtungs-Einrichtungen (2, 3) mit aufeinander liegenden Einrichtungsachsen (2a, 3a) einander zugewandt sind, **dadurch gekennzeichnet, dass** an der ersten Ausrichtungsfläche (2b) eine Anzahl von n Ausrichtungsnuten (4) und an der zweiten Ausrichtungsfläche (3b) mindestens ein bewegliches, zum Eingreifen in eine der n Ausrichtungsnuten (4) von einer Federvorrichtung (6) vorgespanntes Eingriffselement (5) angeordnet ist, wobei n eine ganze positive Zahl ist, welche einer Anzahl von relativen Drehlagen der zusammengeführten Drehausrichtungs-Einrichtungen (2, 3) entspricht, jede Ausrichtungsnut (4) sich schraubenlinienartig über einen Winkelbereich von mindestens 360°/n erstreckt und bei mehr als einer Ausrichtungsnut (4) die Ausrichtungsnuten (4) in Winkelabständen um die erste Einrichtungsachse (2a) verteilt sind, wobei die Winkelabstände vorzugsweise im Wesentlichen gleich gross sind.

2. Drehausrichtungssystem (1) nach Anspruch 1, **dadurch gekennzeichnet, dass** bei einem zusammengeführten Zustand der Drehausrichtungs-Einrichtungen (2, 3) das mindestens eine Eingriffselement (5) im Eingriff mit dem Ende einer der sich schraubenlinienartig über einen Winkelbereich von mindestens 360°/n erstreckenden Ausrichtungsnuten (4) eine der relativen Drehlagen gewährleistet und vorzugsweise die n Ausrichtungsnuten (4) ausgehend von den Enden der sich schraubenlinienartig über einen Winkelbereich von mindestens 360°/n erstreckenden Abschnitte parallel zur ersten Einrichtungsachse weiter führen.

3. Drehausrichtungssystem (1) nach Anspruch 1 oder 2, **dadurch gekennzeichnet, dass** beim Zusammenführen der ersten und zweiten Drehausrichtungs-Einrichtungen (2, 3) mit aufeinander liegenden Einrichtungsachsen (2a, 3a) die erste Ausrichtungsfläche (2b) radial zu den Einrichtungsachsen innerhalb der zweiten Ausrichtungsfläche (3b) angeordnet ist.

4. Drehausrichtungssystem (1) nach einem der Ansprüche 1 bis 3, **dadurch gekennzeichnet, dass** das mindestens eine vorgespannte, bewegliche Eingriffselement (5) entlang einer quer zur zweiten Einrichtungsachse (3a) verlaufenden Linie, vorzugsweise radial zur zweiten Einrichtungsachse (3a), in der zweiten Drehausrichtungs-Einrichtung (3) zwischen einer von der zweiten Ausrichtungsfläche (3b) vorstehenden Position und einer in die zweite Ausrichtungsfläche (3b) aufgenommenen Position bewegbar geführt ist, wobei die Federvorrichtung (6) die Vorspannung für die Bewegung des mindestens einen Eingriffselements (5) in die vorstehende Position bereitstellt.

5. Drehausrichtungssystem (1) nach einem der Ansprüche 1 bis 4, **dadurch gekennzeichnet, dass** das mindestens eine Eingriffselement (5) eine Kugel umfasst, welche von der Federvorrichtung (6) und der zweiten Drehausrichtungs-Einrichtung (3) vorzugsweise drehbar gehalten ist.

6. Drehausrichtungssystem (1) nach Anspruch 4 oder 5, **dadurch gekennzeichnet, dass** beim Zusammenführen der ersten und zweiten Drehausrichtungs-Einrichtungen (2, 3) mit aufeinander liegenden Einrichtungsachsen (2a, 3a) das mindestens eine vorgespannte, bewegliche Eingriffselement (5) mit einem freien Ende bei der ersten Ausrichtungsfläche (2b) direkt in eine der n Ausrichtungsnuten (4) einführbar ist, oder von einem nutfreien Bereich der ersten Ausrichtungsfläche (2b) gegen die in die zweite Ausrichtungsfläche (3b) aufgenommene Position bewegbar und beim weiteren Zusammenführen und Erreichen eines Abschnitts einer Ausrichtungsnut (4) in die vorstehende Position und dabei mit dem freien Ende in die Ausrichtungsnut (4) einführbar ist, wobei beim weiteren Zusammenführen das mindestens eine Eingriffselement (5) mit seinem freien Ende der Ausrichtungsnut (4) folgend das Erreichen einer der relativen Drehlagen erzielbar macht.

7. Drehausrichtungssystem (1) nach einem der Ansprüche 1 bis 6, **dadurch gekennzeichnet, dass** n und somit die Anzahl der Ausrichtungsnuten (4) mindestens drei und vorzugsweise sechs ist.

8. Drehausrichtungssystem (1) nach Anspruch 7, **dadurch gekennzeichnet, dass** an der zweiten Ausrichtungsfläche (3b) mindestens drei und vorzugsweise sechs Eingriffselemente (5) in gleichen Winkelabständen um die zweite Einrichtungsachse (3a) angeordnet sind.

9. Drehausrichtungssystem (1) nach einem der Ansprüche 1 bis 8, **dadurch gekennzeichnet, dass** die erste Drehausrichtungs-Einrichtung (2) ein mit der ersten Ausrichtungsfläche (2b) verbundenes erstes Wellenende (7) mit einer ersten Formkontur (7a) und die zweite Drehausrichtungs-Einrichtung (3) ein mit der zweiten Ausrichtungsfläche (3b) verbundenes zweites Wellenende mit einer zweiten Formkontur (8a) umfasst, wobei die erste Formkontur (7a) in den n relativen Drehlagen formschlüssig mit der zweiten Formkontur (8a) in Eingriff bringbar ist.

10. Drehausrichtungssystem (1) nach einem der Ansprüche 1 bis 9, **dadurch gekennzeichnet, dass** radial ausserhalb der ersten und der zweiten Drehausrichtungs-Einrichtung (2, 3) ein Spannsystem (9) angeordnet ist, das eine erste Spanneinrichtung (10) umfasst, welche um die erste Einrichtungsachse (2a) drehbar mit der ersten Drehausrichtungs-Einrichtung (2) verbunden ist und das eine zweite Spanneinrichtung (11) umfasst, welche um die zweite Einrichtungsachse (3a) drehbar mit der zweiten Drehausrichtungs-Einrichtung (3) verbunden ist, wobei die erste und die zweite Spanneinrichtung (10, 11) in der Richtung der aufeinanderliegenden ersten und zweiten Einrichtungsachse (2a, 3a) so koppelbar sind, dass eine erste Kontaktfläche (10b) der ersten Spanneinrichtung (10) und eine zweite Kontaktfläche (11b) der zweiten Spanneinrichtung (11) mit einer Kopplungskraft beaufschlagt aneinander anliegen und eine der relativen Drehlagen gewährleistet ist.

11. Wechselsystem mit einem Roboterarm (28), einem Magazin (32) für Endeffektoren (30), mindestens einem Endeffektor (30) und mit mindestens einem Drehausrichtungssystem (1) gemäss einem der Ansprüche 1 bis 10, wobei am Roboterarm (28) die erste oder zweite Drehausrichtungs-Einrichtung (2, 3) des mindestens einen Drehausrichtungssystem (1) angeordnet ist und am mindestens einen Endeffektor (30) die zweite bzw. erste Drehausrichtungs-Einrichtung (3, 2) des mindestens einen Drehausrichtungssystem (1) angeordnet ist.
